Europäisches Patentamt

European Patent Office

Office européen des brevets

(11) Publication number: **0 069 435**
**B1**

## (12) EUROPEAN PATENT SPECIFICATION

(45) Date of publication of patent specification: **25.03.87**

(21) Application number: **82300315.7**

(22) Date of filing: **21.01.82**

(51) Int. Cl.⁴: **B 01 D 17/02,** C 02 F 1/68,
B 01 J 20/32

(54) **Cationic polymeric material for treating water, preparation and utilisation thereof.**

(30) Priority: **19.06.81 JP 95742/81**

(43) Date of publication of application:
**12.01.83 Bulletin 83/02**

(45) Publication of the grant of the patent:
**25.03.87 Bulletin 87/13**

(84) Designated Contracting States:
**DE FR GB NL**

(56) References cited:
**DE-A-1 517 656**
**DE-A-2 806 851**
**FR-A-2 283 101**
**US-A-3 352 424**
**US-A-4 082 660**

(73) Proprietor: **MITSUBISHI RAYON CO. LTD.**
**3-19, Kyobashi 2-chome Chuo-Ku**
**Tokyo 104 (JP)**

(72) Inventor: **Sugimori, Shuichi**
**2-6-402, 3-chome, Kurokawa**
**Otake-shi Hiroshima (JP)**
Inventor: **Kawamura, Tomihiko**
**3-1-301, 3-chome, Kurokawa**
**Otake-shi Hiroshima (JP)**
Inventor: **Matsuda, Tadashi**
**3-14-6, Higashi Asahina**
**Kanazawa-ku Yokohama-shi Kanagawa (JP)**
Inventor: **Nakano, Shintaro**
**2-10, 1-chome, Honmachi**
**Meguro-ku Tokyo (JP)**

(74) Representative: **Baillie, Iain Cameron et al**
**c/o Ladas & Parry Isartorplatz 5**
**D-8000 München 2 (DE)**

## Description

This invention relates to material which can be employed in processes for separating organic materials from water and to processes for the preparation of such material.

In particular the invention relates to materials having excellent ability to separate from water organic matters or inorganic matters that are dispersed, emulsified or dissolved in water.

A variety of processing methods have been proposed in regard to treating organic matters in water and, especially, in regard to treating oil-containing waste water. For example, there have been proposed mechanical separation methods utilizing the principle of gravitational separation such as natural flotation, forced flotation, filtration or centrifugal force, separation methods relying upon the electromagnetic means such as ultrasonic waves, electrolysis and electrophoresis, physical or chemical methods relying upon such means as adsorption, absorption, ion-exchange, and coagulation, and methods utilizing microorganisms.

Among the above-mentioned methods, a variety of adsorbing materials have been proposed in connection with the adsorption method which features relatively simple and stable operation. However, no adsorbing material has yet been found that is effective for treating finely dispersed oils and emulsified oils. With regard to the adsorbing materials which have now been proposed, for example, the hydrophobic synthetic resins or fine synthetic resin structures are mainly used for treating oils that are floating or coarsely dispersed oils. Activated carbon in the form of granules is effective to some extent for treating finely dispersed oils. The activated carbon, however, adsorbs the oils in very small amounts, and is not very effective for treating emulsified oils.

Anion-exchange resins have large amounts of cationic groups on the surface thereof, have a large degree of swelling for water, and are effective for treating low molecular weight substances such as ions. An anion-exchange resin, however, is not effective for oil droplets of the order of microns because the resin does not sufficiently exhibit a cationic effect in relation to such droplets. Further, since the true density depends upon the base resin, an anion-exchange resin cannot withstand the process of back washing.

In recent years, there has been proposed a soft polyurethane foam containing cationic groups. With the foam structure, however, the density tends to increase as it adsorbs oils and suspended materials. Moreover, the foam cannot be back washed. There has further been proposed treating materials comprising a surfactant, silicone oil or amine that is held on the surface of the base material such as fiber, fine resinous structure or silica alumina particles. Some of these exhibit good separating ability for fine oil droplets and emulsified oils during the initial stage of use. However, the adhesiveness is not sufficient between the base material and components held on the base material; the components are split off during use. Consequently, the materials cannot be substantially back washed, and are not capable of withstanding use for extended periods of time.

In DE—A—2 806 851 there is described a water-treating material having a cross-linked polymer attached to the surface of a base material. In FR—A—2 283 101 there is described attachment of a polymer which has a cationic component but to an inorganic base. The material does not appear to provide the necessary water-treating properties.

As mentioned above, there has not yet been found a treating material that is effective for treating fine oil droplets and emulsified oils.

Usually, a colloid which is stably dispersed in water, for example fine oil droplets or organic high molecules (hereinafter described as oil droplets) have a negative electric charge in the surface layer of the oil droplets. The stability of the oil droplets is dependent upon the diameter of oil droplets and the amount of electric charge. Therefore, it is preferable that a material for removing oil droplets neutralize the electric charge on the surface of the droplets so that they lose stability, possess electric charge of a polarity opposite to that of oil droplets so as to attract oil droplets, contain organic high molecular substances that are capable of adsorbing or embracing oils, be composed of a porous material having large surface areas, not be clogged by solid substances suspended in water, permit the passage of water without increasing the pressure, and release substances that are clogging the water-treating material when it is back washed, and/or have increased mechanical rigidity, swell only slightly in water, and sink in water.

The object of the present invention is to provide water-treating materials having excellent ability to remove organic or inorganic substances that are dispersed, emulsified or dissolved in water, and to provide a process for preparing such water-treating materials. Particularly, the object of the present invention is to provide water-treating materials which are suitable for treating waste water containing fine oil droplets, and to provide a process for preparing the water-treating materials.

According to the invention there is provided a granular water-treating material having a cross-linked polymer on at least a portion of the surface of a base material characterised in that the polymer is a cationic polymer and is attached to a base material which is (a) activated carbon, (b) coal, (c) grass peat, (d) an organic polymer, (e) an organic copolymer, (f) a mixture of an organic polymer and a non-carbonaceous inorganic material, (g) a mixture of an organic copolymer and a non-carbonaceous inorganic material, (h) a complex of an organic polymer with a non-carbonaceous inorganic material or (i) a complex of an organic copolymer with a non-carbonaceous inorganic material.

There is also provided a process for preparing a granular water-treating material having a cross-linked polymer on at least a portion of a base material by reacting together a compound (A) and a cross-linking agent (B) in the presence of a granular base material characterised in that compound (A) is a cationic

2

**0 069 435**

compound, and the base material is (a) activated carbon, (b) coal, (c) grass peat, (d) an organic polymer, (e) an organic copolymer, (f) a mixture of an organic polymer and a non-carbonaceous inorganic material, (g) a mixture of an organic copolymer and a non-carbonaceous inorganic material, (h) a complex of an organic polymer with a non-carbonaceous inorganic material or (i) a complex of an organic copolymer with a non-carbonaceous inorganic material.

In addition there is provided a method of separating oil dispersed in water wherein the dispersion is treated with a granular water-treating material having a crosslinked polymer attached to at least a portion of the surface of a base material characterised in that the polymer is a cationic polymer and said base material is (a) activated carbon, (b) coal, (c) grass peat, (d) an organic polymer, (e) an organic copolymer (f) a mixture of an organic polymer and a non-carbonaceous inorganic material, (g) a mixture of an organic copolymer and a non-carbonaceous inorganic material, (h) a complex of an organic polymer with a non-carbonaceous inorganic material or (i) a complex of an organic copolymer with a non-carbonaceous inorganic material.

In the process of the invention for preparing water-treating materials a cationic component (A), and its cross-linking agent (B), and a polymerisation initiator or additive (C), if required are reacted together under the condition in which they are mixed together with the specified base materials, or in which they are adhered onto the surface of the specified base material, thereby to form a cross-linked cationic polymer.

The basic material and the components which can be used for preparing the cationic polymer and the process for preparing the water-treating material in the present invention will be explained below. Blowing agent or additives can be added, as required, in the case of molding process adopted. Examples of non-carbonaceous inorganic materials include barium sulfate, magnesium aluminate, iron oxide, magnesium oxide, silica, alumina, zeolite, pumice containing such elements as silicon, aluminum, calcium, magnesium and iron, foamed clay, slag, foamed slag, foamed glass, or natural granulated material such as pearlite, garnet or sand.

Examples of the polymer material include polymers or copolymers from such monomers as ethylene, propylene, styrene, vinyl acetate, vinyl chloride, acrylonitrile, (meth)acrylamide, (meth)acrylic acid, methyl (meth)acrylate, divinyl benzene, butadiene, isoprene and chloroprene, or polyurethane, polyurea, polyethylene terephthalate, nylon, aromatic polyamide, polycarbonate, polysulfone and polyether sulfone.

The basic material can be a complex or a mixture of inorganic material and polymer material and can include complexes or mixtures of inorganic granules of the above-mentioned inorganic materials with the above-mentioned polymers or copolymers.

As to the proportions of these complexes or mixtures, a wide range is available. Usually, however, the compositions containing 80—20% by weight of inorganic materials and 20—80% by weight of polymer materials are preferable.

Examples of the organic cationic component (A) include amines such as ethylenediamine, diethylenetriamine, triethylenetetramine, hexamethylenediamine, vinylamine, ethyleneimine and aniline, amino alcohols such as N,N-diethylethanolamine, aminoethylethanolamine, N-methyl-N,N-diethanolamine, N,N-diisopropylethanolamine, N,N-dibutylethanolamine, N-methylethanolamine, and triethanol amine, dialkylaminoethyl methacrylate, vinylpyridine, dicyan diamide, vinylimidazoline, or the quaternary ammonium salts of the above-mentioned compounds which are cationized with such a reagent as benzyl chloride, dimethyl sulfate or methyl chloride, or a monomer, a polymer or a copolymer such as 2-hydroxy-3-methacryloxypropyltrimethylammonium halide, or a polyester polyamine, polyamide polyamine, a cationic vinyl lactam/acrylamide copolymer, a cyclized polymer of diallylammonium halide, a half-amide obtained by acting diamine upon a copolymer of isobutylene and maleic anhydride, a polycondensate of ammonia and epichlorohydrine, a quaternary ammoniate obtained by reacting diamine and methyl chloride upon a copolymer of styrene and maleic anhydride, a polycondensate of alkylene dichloride and alkylene polyamine, a polycondensate of aspartic acid and hexamethylene diamine, a polycondensate of aniline and formaldehyde, and polymers known as a cationic high molecular coagulating agent such as chitosan. It is also allowable to use sulfonium compounds such as alkyldimethyl sulfonium or phosphonium compounds such as tetraalkyl phosphoniate.

Examples of the cross-linking agents (B) include epoxy compounds such as (poly)ethyleneglycol diglycidyl ether, (poly)propyleneglycol diglycidyl ether, neopentylglycol diglycidyl ether, (di)glycerol polyglycidyl ether, trimethylolpropane polyglycidyl ether, sorbitol polyglycidyl ether, and epichlorohydrine, (meth)acrylates such as (poly(ethyleneglycoldi(meth)acrylate, tetrahydrofurfuryl(meth)acrylate, 1,4-butanediol diacrylate, 1,6-hexanediol diacrylate, neopentylglycol diacrylate, trimethylolpropane triacrylate, and pentaerithritol acrylate, epoxy acrylates such as (diethyleneglycol diglycidylether dimethacrylate, propyleneglycol diglycidylether diacrylate, glycerolpolyglycidylether polyacrylate, and phthalic acid diglycidylester diacrylate, isocyanates such as diphenylmethane diisocyanate, tolylene diisocyanate and hexamethylene diisocyanate, hydroxyl group-containing compounds such as polyester polyol, polyether polyol, acryl polyol, derivatives of castor oil, derivatives of tall oil and polybutadiene containing hydroxyl groups at the terminals, and prepolymers thereof.

Examples of the polymerization initiator C include hydrogen peroxide, potassium persulfate, sulforous acid, sodium hydrogensulfite, benzoyl peroxide, azobisisobutyl nitryl, amines such as trialkylamine and

3

tetraalkyldiamine, and organic metal compounds such as di-n-butyltin dilaurate. Further, examples of the additive will include ordinarily used stabilizers, emulsifiers, pigments and dyestuffs.

In preparing the water-treating materials according to the present invention, the components A and B, or the components A, B and C can be adhered onto or mixed with the base material by any method, and the cross-linked cationic polymer can also be formed by any method. For instance, the base material can be immersed for a predetermined period of time in an aqueous solution, in an organic solvent solution, or in a mixture solution consisting of water and an organic solvent in which have been dissolved components A and B, or components A, B and C, and after the solution is removed, the granular base material is treated with heat or irradiated with light. The granular base material coated with the components A and B, or with the components A, B and C, can be heated with heat or irradiated with light. Immersing and coating can be used jointly. Visible rays, ultraviolet rays or electron rays can be used as a source of light irradiation.

As for the immersing method, the concentration of immersing liquid and the immersing time will vary depending upon the type of components A, B and C and the type of solvent. Usually, however, the concentration of solute ranges from about 0.5 to 30% by weight, and the immersing time ranges from about 0.5 to 3 hours. As for the coating method, the components A, B (and C) are adhered to the granular base material by dripping or spraying while the latter is in a fluidized bed.

Usually the heat-treatment should be effected at a temperature of 50° to 200°C for 10 minutes to 20 hours.

When the heat of reaction produced in cross-linked cationic polymer formation can be used, another heat-treatment is not necessary. When the base material is to be irradiated with light, the irradiation should be continued, usually, for not longer than 10 hours although it may vary depending upon the type of light and the intensity of light.

Further, the water-treating material of the present invention can be obtained by mixing the components A and B, or the components A, B and C and base material and thereafter, molding the mixture by using an internal mixer, a Banbury mixer, a melt extruder or a granulating machine, followed, as required, by granulating through cutting or smash.

For example, the water-treating material can be obtained by mixing the base material consisting of inorganic powder and organic polymer powder and further blowing agent or cross-linking agent, if required, and above-mentioned components and thereafter by kneading and cross-linking and molding to the cylindrical form with melt extruder and thereafter by granulating with pelletizer or granulator. Alternatively or in addition, the mixture of the above-mentioned base material and components can be melt kneaded and cross-linked and granulated at the same time by shearing action of these equipments.

Because of the use of blowing agent and/or cross-linking agent, the surface of the water-treating material is increased and therefore its treating ability is increased.

For a blowing agent, widely well known materials, for example azodicarbonamide and benzene sulfonyl hydrazide, can be used. For a cross-linking agent, widely well known materials such as benzoylperoxide, dicumylperoxide or tert.-butyl peroxyhexane can be used.

In the thus obtained water-treating material of the present invention, the cross-linked cationic polymer is held in any effective amount and preferably in an amount of from 0.05 to 50% by weight, and more preferably in an amount of from 0.1 to 30% by weight.

When the cross-linked cationic polymer is present in an amount of less than 0.05% by weight, organic substances and inorganic substances may not be sufficiently removed from water. When the cross-linked cationic polymer is present in an amount greater than 50% by weight, on the other hand, the cationic groups may be embedded in the water-treating material, and no further increase in effect may result. When the cationic organic polymer is a nitrogen-containing compound, the content of nitrogen in the water-treating material should preferably range from 0.005 to 10% by weight, and more preferably from 0.01 to 5% by weight. Further, the capacity of ion-exchange of the water-treating material should preferably be from 0.01 to 10 meq/g, and more preferably be from 0.02 to 2 meq/g.

The water-treating material of the present invention is in a granular form. In order that the water-treating material does not float in water during the use, it should most suitably have a true density of greater than 1.0 g/cm³, and particularly preferably greater than 1.2 g/cm³.

The water-treating material of the present invention can be effectively used for treating waste water containing a variety of mineral oils, animal oils and vegetable oils, alone or in a mixture. The water-treating material of the present invention removes these oils which may have been dispersed or emulsified in water. The separating ability of the water-treating material is not affected by other solid components that are contained in water in addition to oils.

The water-treating material of the present invention is effective for removing not only oils but also for removing negatively charged colloid such as silica colloid.

The water-treating material features very excellent adhesiveness between the base material and the cross-linked cationic polymer, and is capable of being used for extended periods of time.

The water-treating material of the present invention can be used not only as an adsorbing material but also as a coalescing agent. When the water-treating material is used as an adsorbing material, the adsorption system can employ the material in a slurry. Usually, however, it is preferred to use the system of charged tower adsorption. The charged tower system can also be employed even when the water-treating material is used as a coalescing agent.

The water-treating material of the present invention used as the adsorbing material or the coalescing agent for the charged tower system, can be back washed or can be washed for its surfaces, and is re-used. Water or the air can be used for washing the water-treating material.

The water-treating material of the present invention is very effective for treating waste water containing emulsified or dispersed oils in a wide field of applications, that have hitherto been treated with difficulty, such as waste water containing cutting oil, waste water containing rolling oil, waste water produced from the washing of oil tanks, waste water produced from the washing of machines, waste water from paint factories, waste water from food factories, waste water containing emulsified oils such as drain from the compressors, ballast water of oil tankers, bilge water, and waste water from the drilling of crude oil. The water-treating material is also effective for treating waste water to such a degree that it can be re-used.

The invention will be explained below by way of working examples.

Examples 1 to 3

Three base materials shown in Table 1 were introduced each in an amount of 300 g into a mixture solution consisting of 10 g of a polyethyleneimine (molecular weight 50,000; hereinafter referred to as component A), 10 g of a polyethyleneglycol diglycidylether (hereinafter referred to as component B) and 300 g of water, and were left to stand for 60 minutes such that the components A and B adhered on the base materials. Thereafter, the filtrate was removed by suction filtration, the base materials on which have been adhered the components A and B were heat-treated with hot air heated at 80°C for 5 hours so that the components A and B reacted with each other on the surface of the base materials and, thus, the water-treating materials of the present invention were obtained. Amounts of the cross-linked cationic polymer and nitrogen in the water-treating materials were as shown in Table 1.

These water-treating materials were then charged into columns each having a diameter of 20 mm to a height of 800 mm, and a model water (oil content, 16 mg/l) was allowed to flow down through the each column at a flow speed of 4 m/h for 50 hours. The model water was prepared in the following way. That is, 4 g of a crude oil (Arabian light) and 1 l of water was stirred together in a mixer for 5 minutes, and the mixture was diluted with water to a volume of 200 l. The diluted water was left to stand for more than 20 hours in a drum. Thereafter, 100 l of water of the lower layer was used as the model water. Table 1 shows oil contents in the treated water after 10 hours and 50 hours have passed.

To examine the adhesiveness between the base material component and the subcomponents, 300 g of the water-treating material and 10 l of water were put in a beaker and washed by stirring at 1 hr/day for a week, and thereafter, charged into columns and the model water was allowed to flow in the above-mentioned way. Oil contents in the treated water are shown in the right columns in Table 1.

In the case of carbonaceous base material, the treating ability had decreased after the washing.

The oil contents were measured in accordance with the extraction of oils with carbon tetrachloride—infrared ray analytical method specified under JIS K 0102 18., Reference 1.

TABLE 1

| Example | Base material | Water-treating material | | | Oil content in the treated water (mg/l) | | | |
|---|---|---|---|---|---|---|---|---|
| | | Cationic organic polymer (% by weight) | Nitrogen content (% by weight) | True density (g/cm³) | Unwashed material | | Washed material | |
| | | | | | After 10 hours | After 50 hours | After 10 hours | After 50 hours |
| 1 | Granulated activated carbon (diameter 0.8—2.6 mm) | 3.1 | 0.5 | 2.1 | 0.9 | 1.1 | 2.8 | 4.3 |
| 2 | Anthracite (diameter 0.8—2.6 mm) | 1.8 | 0.3 | 2.0 | 0.5 | 0.9 | 4.9 | 6.8 |
| 3 | Composite material (note) (diameter 0.9—2.9 mm) | 1.4 | 0.2 | 1.4 | 0.7 | 0.8 | 0.5 | 0.5 |

Note—Granular composite material consisting of 50 parts by weight of barium sulfate and 50 parts by weight of ethylene/vinyl acetate copolymer.

Comparative Examples 1 to 6

Three base materials same as those used in Examples 1 to 3, a strongly basic anion-exchange resin (Diaion PA-316, a product of Mitsubishi Kasei Kogyo Co.) and a weakly basic anion-exchange resin (Diaion WA-20, a product of Mitsubishi Kasei Kogyo Co.) were charged into the column having a diameter of 20 mm to a height of 800 mm in the same way as in Examples 1 to 3, and the model water was allowed to flow. Oil contents in the treated water are shown in Table 2, from which it will be understood that the treated water contained oil components at considerably high concentrations compared with those of the treated water mentioned in Examples 1 to 3 of the present invention.

TABLE 2

| Comparative Example | Base material | Oil content in the treated water (mg/l) | |
| --- | --- | --- | --- |
| | | After 10 hours | After 50 hours |
| 1 | Granulated activated carbon | 8.5 | 7.6 |
| 2 | Anthracite | 9.3 | 10.7 |
| 3 | Composite material (note) | 8.0 | 8.3 |
| 4 | Strongly basic cation-exchange resin | 2.1 | 5.3 |
| 5 | Weakly basic cation-exchange resin | 11.1 | 8.6 |

Note—The same material as used in Example 3.

Examples 4 to 6

Three base materials that were used in Examples 1 to 3 were introduced each in an amount of 300 g into a mixture solution consisting of 92 g of a methacrylic acid aminoethyltrimethylammonium chloride (hereinafter referred to as component A), 8 g of a polyethyleneglycol dimethacrylate (hereinafter referred to as component B), 1 g of potassium persulfate (hereinafter referred to as component C), and 300 g of water, and were allowed to stand for 60 minutes, so that the components A, B and C adhered on the base materials. Thereafter, the filtrate was removed by suction filtration, the base materials on which have been adhered the components A, B and C were heat-treated with hot air heated at 60°C for 6 hours so that the components A, B and C reacted with each other on the surface of the base materials and, thus, the water-treating materials of the present invention were obtained. Amounts of the cationic organic polymer and nitrogen in the water-treating materials were as shown in Table 3.

The water-treating materials were then charged into the column having a diameter of 20 mm to a height of 800 mm in the same manner as in Examples 1 to 3, and the model water was allowed to flow. Table 3 shows oil contents in the treated water.

TABLE 3

| Example | Water-treating material | | | | Oil content in the treated water (mg/l) | |
|---|---|---|---|---|---|---|
| | Base material | Crosslinked cationic polymer (% by weight) | Nitrogen content (% by weight) | True density (g/cm³) | After 10 hours | After 50 hours |
| 4 | Granulated activated carbon | 8.6 | 0.5 | 2.0 | 1.2 | 1.4 |
| 5 | Anthracite | 2.3 | 0.1 | 2.0 | 2.7 | 3.9 |
| 6 | Composite material (note) | 7.1 | 0.4 | 1.4 | 0.3 | 0.5 |

Note—The same material as used in Example 3.

Example 7

44 parts by weight of N-methyldiethanolamine, 46 parts by weight of benzyl chloride and 10 parts by weight of water were heated at 80°C and reacted with stirring to synthesize a cationic compound (hereinafter referred to as component A). A mixture consisting of the component A and a tetrafunctional polyetherpolyol (molecular weight 5,900; hereinafter referred to as component B-1) each in an equal amount, was adhered onto 1500 g of the base material shown in Table 4. While the base material on which had been adhered the components A and B-1 was being fluidized by a blower, a mixture consisting of 1000 g of 2,4-tolylene diisocyanate/2,6-tolylene diisocyanate (80:20) (hereinafter referred to as component B-2) and 15 ml of di-n-butyltin dilaurate (hereinafter referred to as component C), was sprayed, and thereafter, was heat-treated with the hot air heated at 80°C for 20 minutes so that the components A, B-1, B-2 and C were reacted together on the surface of the base material and, thus the water-treating material of the present invention was obtained.

The water-treating materials were then charged into the column in the same manner as in Examples 1 to 3, and the model water was allowed to flow. The results were as shown in Table 4.

9

TABLE 4

| Example | Raw materials | | | Water-treating material | | | Oil content in the treated water (mg/l) | |
|---|---|---|---|---|---|---|---|---|
| | Base. material | Amount of mixture of A and B-1, adhered | Amount of mixture of B-2 and C, adhered | Crosslinked cationic polymer (% by weight) | Ion-exchange capacity (meq/g) | True density (g/cm$^3$) | After 10 hours | After 50 hours |
| 7 | Composite material (note) (diameter 0.9— 2.9 mm) 1500 g | 429 g | 153 g | 28.0 | 0.37 | 1.3 | 1.5 | 1.1 |

Note—Granular composite material consisting of 40 parts by weight of barium sulfate and 60 parts by weight of ethylene/vinyl acetate copolymer.

Example 8

A mixture consisting of 100 parts by weight of a crude diphenylmethanediisocyanate (containing 30.5% of NCO) (hereinafter referred to as component B-1) and 400 parts by weight of a tolylenediisocyanate prepolymer of liquid polybutadiene (Poly bd HTP-9, a product of Idemitsu Sekiyu Kagaku Co.) (hereinafter referred to as component B-2) was adhered in an amount of 250 g onto 1500 g of the base material shown in Table 5. While the base material on which had been adhered the components B-1 and B-2 were being fluidized by a blower, a mixture consisting of 10 ml of di-n-butyltin dilaurate (hereinafter referred to as component C) and 1000 g of a cationic compound (hereinafter referred to as component A) which is composed of 44 parts of N-methyl diethanolamine, 46 parts of benzyl chloride and 20 parts of water, was sprayed in an amount of 180 g, and was heat-treated with the hot air heated at 80°C for 20 minutes in the same manner as in Example 7 so that the components B-1, B-2, A and C were reacted together on the surfaces of the base material and, thus the water-treating material of the present invention were obtained.

The water-treating material was then charged into columns under the same conditions as in Examples 1 to 3 and the model water was allowed to flow therethrough. The results were as shown in Table 5.

TABLE 5

| Example | Water-treating material | | | | Oil content in the treated water (mg/l) | |
|---|---|---|---|---|---|---|
| | Base material | Crosslinked cationic polymer (% by weight) | Ion-exchange capacity (meq/g) | True density (g/cm$^3$) | After 10 hours | After 50 hours |
| 8 | Composite material (note) | 22.3 | 0.30 | 1.4 | 1.1 | 1.4 |

Note—The same material as used in Example 7.

Example 9

While 300 g of a basic material represented in Table 6 was being fluidized in a Henschel mixer (inner diameter of the vessel 150 mm), N-methyl-N,N-diethanolamine (hereinafter referred to as component A) and crude diphenylmethane diisocyanate (NCO content 30.5%; hereinafter referred to as component B) were dripped in order. Thereby component A and B were reacted together on the surfaces of the base material, and thus the water-treating material of the present invention were obtained.

The water-treating material was then charged into the column in the same manner as in Example 1, and the model water was allowed to flow. The results were as shown in Table 6.

TABLE 6

| Example | Raw materials | | | Water-treating material | | | Oil content in the treated water (mg/l) | |
|---|---|---|---|---|---|---|---|---|
| | Basic material | Component A | Component B | Crosslinked cationic polymer (% by weight) | Nitrogen content (% by weight) | True density (g/cm³) | After 10 hours | After 50 hours |
| 9 | Repelletized polyester (note) 300 g (0.8—2.9 mm) | 15 g | 36 g | 14.5 | 0.50 | 1.3 | 0.8 | 1.2 |

Note—Granule made by heat bonding from polyester staple fibers.

Examples 10 and 11

A mixture of a composition shown in Table 7 was mixed in a Henschel mixer for 15 minutes, and was melted, cross-linked and sheared using a vented melt extruder having an inner diameter of 50 mm at 150°—200°C of barrel temperature to obtain granules having diameters of 0.5 to 5.1 mm.

Granules having diameters of 0.9 to 2.9 mm were taken out from the thus obtained water-treating materials, and were charged into the column under the same condition as in Example 1. The model water was then allowed to flow through the column. The results were as shown in Table 7.

Examples 12 to 14

A mixture of a composition shown in Table 8 was mixed in a Henschel mixer for 15 minutes, and was extruded using a vented melt extruder having an inner diameter of 30 mm at 150°—200°C of barrel temperature, and pelletized by pelletizer. Thus foamed and porous pellets having sizes of about 3 mm were obtained. Then the granules having diameters of 0.5 to 3.7 mm were obtained by granulating these pellets with a granulator.

Granules having diameters of 0.9 to 2.9 mm were taken out from the thus obtained water-treating materials, and were charged into the column under the same conditions as in Example 1. The model water was then allowed to flow through the columns. The results were as shown in Table 8.

TABLE 7

| Example | Composition of raw material | | | | | Water-treating material | | Oil content in the treated water (mg/l) | |
|---|---|---|---|---|---|---|---|---|---|
| | Base material | | | Components | | | | | |
| | EVA (note 1) (parts by weight) | Barium sulfate (parts by weight) | Organic peroxide (note 2) (parts by weight) | Polyethyleneimine (note 3) (parts by weight) | Trimethylol-propane polyglycidyl ether (parts by weight) | Nitrogen content (% by weight) | True density (g/cm$^3$) | After 10 hours | After 50 hours |
| 10 | 50 | 50 | 2.0 | 4.0 | 2.0 | 1.1 | 1.6 | 0.6 | 0.9 |
| 11 | 40 | 60 | 1.5 | 2.0 | 1.0 | 0.6 | 1.8 | 0.7 | 0.9 |

Note 1—Ethylene/vinyl acetate copolymer (vinyl acetate, 18% by weight)
Note 2—2,5-dimethyl-2,5-di(tertiary butylperoxy) hexane
Note 3—Molecular weight 1000.

TABLE 8

| Example | Composition of raw material | | | | | Water-treating material | | Oil content in the treated water (mg/l) | |
|---------|---|---|---|---|---|---|---|---|---|
| | Base material | | | Components | | | | | |
| | | | | Polyethyleneimine (note) (parts by weight) | Trimethylol-propane polyglycidyl ether (parts by weight) | Nitrogen content (% by weight) | True density (g/cm³) | After 10 hours | After 50 hours |
| 12 | EVA 50 parts | Barium sulfate 50 parts | Azodicarbon-amide 5 parts | 3.0 | 1.5 | 0.9 | 1.6 | 0.9 | 1.8 |
| 13 | EVA 40 parts | Barium sulfate 60 parts | — ditto — | 4.0 | 2.0 | 1.1 | 1.8 | 1.4 | 1.9 |
| 14 | Poly-ethylene 50 parts | Silica 50 parts | — ditto — | 4.0 | 2.0 | 1.1 | 1.6 | 1.1 | 2.0 |

Note—Molecular weight 1000.

0 069 435

Examples 15 and 16

The water-treating materials of the present invention prepared in Examples 1 and 3 were charged into columns having a diameter of 20 mm to a height of 800 mm, and the model water was allowed to flow through these columns at a flow speed of 4 m/h for 50 hours. The model water was prepared in the following way. That is, 4 g of a special turbin oil (produced by Maruzen Sekiyo Co.), 0.2 g of polyoxy ethylenenonylphenyl ether and 1 liter of water were stirred together in a mixer for 5 minutes. The mixture was then diluted with water to a volume of 200 l, and the thus obtained water containing emulsified oil was used as the model water. Turbidity of the model water and the treated water was measured using a turbidimeter. The results were as shown in Table 9.

TABLE 9

| Example | Water-treating material | Turbidity of model water | Turbidity of treated water (ppm) | |
|---|---|---|---|---|
| | | | After 10 hours | After 50 hours |
| 15 | Material of Example 1 | 21 | 1.2 | 0.8 |
| 16 | Material of Example 3 | 21 | 0.9 | 1.2 |

Example 17

The water-treating material of the present invention prepared in Example 3 was charged into a column having a diameter of 20 mm to a height of 800 mm, and the model water was allowed to flow through the column. The model water was prepared in the following way. That is, 4 g of a crude oil (Arabian light) and 1 liter of water were stirred together in a mixer for 5 minutes. The mixture was then diluted with water to a volume of 200 l. The water-treating material exhibited good behaviour during the back washing, and the back wash developing factor at this moment was 29%. After the back wash has been finished, city water was allowed to flow downwards at a flow speed of 4 m/h for 10 minutes and, then the model water was allowed to flow again. The results were as shown in Table 10.

TABLE 10

| Water-treating material | | | Oil content of treated water (mg/l) | | | |
|---|---|---|---|---|---|---|
| Cross-linked cationic polymer (% by weight) | Nitrogen content (% by weight) | True density (g/cm$^3$) | Before back washed | | After back washed | |
| | | | After 50 hours | After 100 hours | After 50 hours | After 100 hours |
| 1.6 | 0.37 | 1.4 | 0.9 | 1.0 | 0.8 | 1.0 |

**Claims**

1. A granular water-treating material having a cross-linked polymer on at least a portion of the surface of a base material characterised in that the polymer is a cationic polymer and is attached to a base material which is (a) activated carbon, (b) coal, (c) grass peat, (d) an organic polymer, (e) an organic copolymer, (f) a mixture of an organic polymer and a non-carbonaceous inorganic material, (g) a mixture of an organic copolymer and a non-carbonaceous inorganic material, (h) a complex of an organic polymer with a non-carbonaceous inorganic material or (i) a complex of an organic copolymer with a non-carbonaceous inorganic material.

2. A granular water-treating material according to Claim 1 characterised in that the cross-linked cationic polymer is attached in an amount of 0.05 to 50% by weight on the base material.

3. A granular water-treating material according to Claim 2 characterised in that the amount is 0.1 to 30% by weight.

4. A granular water-treating material according to any one of Claims 1 to 3 characterised in that the cationic polymer is a nitrogen containing polymer and the content of nitrogen is from 0.005 to 10% by weight.

5. A granular water-treating material according to any one of Claims 1 to 4 characterised in that its ion exchange capacity is from 0.01 to 10 meq/g.

6. A granular water-treating material according to any one of Claims 1 to 5 characterised in that its density is greater than 1.0 g/cm³.

7. A process for preparing a granular water-treating material having a cross-linked polymer on at least a portion of a base material by reacting together a compound (A) and a cross-linking agent (B) in the presence of a granular base material characterised in that compound (A) is a cationic compound, and the base material is (a) activated carbon, (b) coal, (c) grass peat, (d) an organic polymer, (e) an organic copolymer, (f) a mixture of an organic polymer and a non-carbonaceous inorganic material, (g) a mixture of an organic copolymer and a non-carbonaceous inorganic material, (h) a complex of an organic polymer with a non-carbonaceous inorganic material or (i) a complex of an organic copolymer with a non-carbonaceous inorganic material.

8. A process according to Claim 7 wherein the reactants include at least one polymerisation additive, preferably a polymerisation initiator.

9. A process according to either of Claims 7 and 8 characterised in that the components (A) and (B) are adhered onto the surface of granular base material, then cross-linked to the final cationic polymer.

10. A process according to Claim 9 characterised in that the components (A) and (B) are adhered on the surface of the granular base material while the base material is in a fluidized bed.

11. A process according to Claim 9 characterised in that the components (A) and (B) are adhered to the surface of the granular base material in a solution.

12. A process according to any one of Claims 7 to 11 wherein the base material and the components (A) and (B) are mixed and thereafter molded in a melt extruder to form a granular material.

13. A process according to Claim 12 wherein the base material comprises a non-carbonaceous inorganic powder and an organic polymer and as a polymerisation additive a blowing agent.

14. A method of separating oil dispersed in water wherein the dispersion is treated with a granular water-treating material having a cross-linked polymer attached to at least a portion of the surface of a base material characterised in that the polymer is a cationic polymer and said base material is (a) activated carbon, (b) coal, (c) grass peat, (d) an organic polymer, (e) an organic copolymer, (f) a mixture of an organic polymer and a non-carbonaceous inorganic material, (g) a mixture of an organic copolymer and a non-carbonaceous inorganic material, (h) a complex of an organic polymer with a non-carbonaceous inorganic material or (i) a complex of an organic copolymer with a non-carbonaceous inorganic material.

## Patentansprüche

1. Körniges Material zur Behandlung von Wasser, wobei das Material mindestens auf einem Teil der Oberfläche eines Trägermaterials ein vernetztes Polymer besitzt, dadurch gekennzeichnet, daß das Polymer ein kationisches Polymer ist, das an einem Trägermaterial angebracht ist, das aus (a) Aktivkohle, (b) Kohle, (c) Grastorf, (d) einem organischen Polymer, (e) einem organischen Copolymer, (f) einem Gemisch aus einem Organischen Polymer und einem kohlenstoff-freien anorganischen Material, (h) einer Komplexverbindung aus einem organischen Polymer und einem kohnenstofffreien anorganischen Material oder (i) einer Komplexverbindung aus einem organischen Copolymer mit einem kohlenstofffreien anorganischen Material besteht.

2. Körniges Material zur Behandlung von Wasser nach Anspruch 1, dadurch gekennzeichnet, daß das vernetzte kationische Polymer in einer Menge von 0,05 bis 50 Gew.% des Trägermaterials an diesem angebracht ist.

3. Körniges Material zum Behandeln von Wasser nach Anspruch 2, dadurch gekennzeichnet, daß die Menge 0,1 bis 30 Gew.% beträgt.

4. Körniges Material zur Behandlung von Wasser nach einem der Ansprüche 1 bis 3, dadurch gekennzeichnet, daß das kationische Polymer ein stickstoffhaltiges Polymer ist und der Stickstoffgehalt 0,005 bis 10 Gew.% beträgt.

5. Körniges Material zur Behandlung von Wasser nach einem der Ansprüche 1 bis 4, dadurch gekennzeichnet, daß es eine Ionenaustauschkapazität von 0,01 bis 10 Miliäquivalente/g beträgt.

6. Körniges Material zur Behandlung von Wasser nach einem der Ansprüche 1 bis 5, dadurch gekennzeichnet, daß seine Dichte höher ist als 1,0 g/cm³.

7. Verfahren zum Erzeugen eines körnigen Materials zur Behandlung von Wasser, wobei das Material mindestens auf einem Teil eines Trägermaterials ein vernetztes Polymer besitzt und in dem Verfahren in Gegenwart eines Körnigen Trägermaterials eine Verbindung (A) und ein Vernetzungsmittel (B) miteinander umgesetzt werden, dadurch gekennzeichnet, daß die Verbindung (A) eine kationische Verbindung ist und das Trägermaterial aus (a) Aktivkohle, (b) Kohle, (c) Grastorf, (d) einem organischen Polymer, (e) einem organischen. Copolymer, (f) einem Gemisch aus einem organischen Polymer und einem kohlenstofffreien anorganischen Material, (h) einer Komplexverbindung aus einem organischen Polymer und einem kohlenstofffreien anorganischen Material oder (i) einer Komplexverbindung aus einem organischen Copolymer mit einem kohlenstofffreien anorganischen Material besteht.

8. Verfahren nach Anspruch 7, dadurch gekennzeichnet, daß zu den Reaktionspartnern mindestens ein Polymerisationszusatz, vorzugsweise ein Polymerisationsinitiator, gehört.

9. Verfahren nach Anspruch 7 oder 8, dadurch gekennzeichnet, daß die Komponenten (A) und (B) mit der Oberfläche des körnigen Trägermaterials haftfest verbunden werden und dann durch ihre Vernetzung das schließlich erhaltene Polymer erzeugt wird.

10. Verfahren nach Anspruch 9, dadurch gekennzeichnet, daß die Komponenten (A) und (B) mit der Oberfläche des körnigen Trägermaterials haftfest verbunden werden, während sich dieses in einer Wirbelschicht befindet.

11. Verfahren nach Anspruch 9, dadurch gekennzeichnet, daß die Komponenten (A) und (B) in einer Lösung mit der Oberfläche des körnigen Trägermaterials haftfest verbunden werden.

12. Verfahren nach einem der Ansprüche 7 bis 11, dadurch gekennzeichnet, daß die Komponenten (A) und (B) vermischt und dann zum Erzeugen eines körnigen Materials in einem Schmelzextruder formgepreßt werden.

13. Verfahren nach Anspruch 12, dadurch gekennzeichnet, daß das Trägermaterial ein kohlenstoffreies anorganisches Pulver, ein organisches Polymer und als Polymerisationszusatz ein Treibmittel enthält.

14. Verfahren zum Abscheiden von in Wasser dispergiertem Öl durch Behandlung der Dispersion mit einem körnigen Material zur Behandlung von Wasser, wobei das Material ein vernetztes Polymer enthält, das in mindestens einem Teil der Oberfläche eines Trägermaterials angebracht ist, dadurch gekennzeichnet, daß das Polymer ein kationisches Polymer ist und daß das Trägermaterial aus (a) Aktivkohle, (b) Kohle, (c) Grastorf, (d) einem organischen Polymer, (e) einem organischen Copolymer, (f) einem Gemisch aus einem organischen Polymer und einem kohlenstoffreien anorgansichen Material, (h) einer Komplexverbindung aus einem organischen Polymer und einem kohlenstoffreien anorganischen Material oder (i) einer Komplexverbindung aus einem organischen Copolymer mit einem kohlenstoffreien anorganischen Material besteht.

**Revendications**

1. Matériau granulaire pour le traitement de l'eau ayant un polymère réticulé sur au moins une portion de la surface d'un matériau de base, caractérisé en ce que le polymère est un polymère cationique et est lié à un matériau de base qui est (a) un carbon activé, (b) un charbon, (c) une tourbe à herbes, (d) un polymère organique, (e) un copolymère organique, (f) un mélange d'un polymère organique et d'une matière minérale non carbonée, (g) un mélange d'un copolymère organique et d'une matière minérale non carbonée, (h) un complexe d'un polymère organique et d'une matière minérale non carbonée ou (i) un complexe d'un copolymère organique et d'une matière minérale non carbonée.

2. Matériau granulaire pour le traitement de l'eau selon la revendication 1, caractérisé en ce que le polymère cationique réticulé est lié en une quantité de 0,05 à 50 % en poids sur le matériau de base.

3. Matériau granulaire pour le traitement de l'eau selon la revendication 2, caractérisé en ce que la quantité est de 0,1 à 30 % en poids.

4. Matériau granulaire pour le traitement de l'eau selon l'une quelconque des revendications 1 à 3, caractérisé en ce que le polymère cationique est un polymère azoté et la teneur en azote est de 0,005 à 10 % en poids.

5. Matériau granulaire pour le traitement de l'eau selon l'une quelconque des revendications 1 à 4, caractérisé en ce que sa capacité d'échange d'ions est de 0,01 à 10 meq/g.

6. Matériau granulaire pour le traitement de l'eau selon l'une quelconque des revendications 1 à 5, caractérisé en ce que sa masse volumique est supérieure à 1,0 g/cm$^3$.

7. Procédé pour préparer un matériau granulaire pour le traitement de l'eau, ayant un polymère réticulé sur au moins une portion d'un matériau de base, par réaction mutuelle d'un composé (A) et d'un agent réticulant (B) en présence d'un matériau de base granulaire, caractérisé en ce que le composé (A) est un composé cationique et le matériau de base est (a) un charbon activé, (b) un charbon, (c) une tourbe à herbes, (d) un polymère organique, (e) un copolymère organique, (f) un mélange d'un polymère organique et d'une matière minérale non carbonée, (g) un mélange d'un copolymère organique et d'une matière minérale non carbonée, (h) un complexe d'un polymère organique et d'une matière minérale non carbonée, ou (i) un complexe d'un copolymère organique et d'une matière minérale non carbonée.

8. Procédé selon la revendication 7 dans lequel les composés réagissants comprennent au moins un additif de polymérisation, de préférence un amorceur de polymérisation.

9. Procédé selon l'une ou l'autre des revendications 7 et 8, caractérisé en ce que l'on fait adhérer les composants (A) et (B) sur la surface d'un matériau de base granulaire puis on les réticule pour obtenir le polymère cationique final.

10. Procédé selon la revendication 9, caractérisé en ce que l'on fait adhérer les composants (A) et (B) à la surface du matériau de base granulaire alors que le matériau de base est dans un lit fluidisé.

11. Procédé selon la revendication 9, caractérisé en ce que l'on fait adhérer les composants (A) et (B) à la surface du matériau granulaire de base dans une solution.

12. Procédé selon l'une quelconque des revendications 7 à 11 dans lequel le matériau de base et les composants (A) et (B) sont mélangés puis traités dans une extrudeuse pour masse fondue pour former un matériau granulaire.

13. Procédé selon la revendication 12, dans lequel le matériau de base comprend une poudre minérale non carbonée et un polymère organique et, comme additif de polymérisation, un agent d'expansion.

**0 069 435**

14. Procédé de séparation d'une huile dispersée dans l'eau dans lequel la dispersion est traitée avec un matériau granulaire pour le traitement de l'eau ayant un polymère réticulé lié à au moins une portion de la surface d'un matériau de base, caractérisé en ce que le polymère est un polymère cationique et ledit matériau de base est (a) un charbon activé, (b) un charbon, (c) une tourbe à herbes, (d) un polymère organique, (e) un copolymère organique, (f) un mélange d'un polymère organique et d'une matière minérale non carbonée, (g) un mélange d'un copolymère organique et d'une matière minérale non carbonée, (h) un complexe d'un polymère organique et d'une matière minérale non carbonée ou (i) un complexe d'un copolymère organique et d'une matière minérale non carbonée.

21